# EUROPÄISCHE PATENTSCHRIFT

(11) **EP 2 689 840 B1**
(45) Veröffentlichungstag und Bekanntmachung des Hinweises auf die Patenterteilung: **19.04.2017**
(21) Anmeldenummer: 13166709.9
(22) Anmeldetag: 06.05.2013
(51) Int. Cl.: B01J 19/18, C01G 19/00, C01B 17/20, C01B 19/00, C01G 1/12

(54) **Verfahren und Vorrichtung zur Herstellung von Metallchalkogeniden**
Method and device for producing metal chalcogenides
Procédé et dispositif destinés à la fabrication de chalcogénures métalliques

(30) Priorität: 25.07.2012 AT 3032012 U
(43) Veröffentlichungstag der Anmeldung: 29.01.2014
(73) Patentinhaber: Rimmer, Karl, 9231 Köstenberg (AT)
(72) Erfinder: Rimmer, Karl, 9231 Köstenberg (AT)
(74) Vertreter: KLIMENT & HENHAPEL

(56) Entgegenhaltungen:
- DE-A1- 2 717 360
- SU-A- 1 148 832
- US-A- 3 577 231
- US-A- 4 676 969
- DATABASE WPI Week 198542 Thomson Scientific, London, GB; AN 1985-261868 XP002716208, & SU 1 148 832 A (AS USSR SOLIDS PHYS) 7. April 1985 (1985-04-07)

## Beschreibung

### GEBIET DER ERFINDUNG

Die Erfindung betrifft ein Verfahren zur Herstellung von Metallchalkogeniden, insbesondere von Metallsulfiden, wie Zinnsulfid, wobei das Metall und das Chalkogen bei Temperaturen von 200-1700°C, insbesondere von 800-1200°C, in einem Behälter zu Metallchalkogeniden umgesetzt werden, sowie eine entsprechende Vorrichtung.

Die Elemente der 6. Hauptgruppe des Periodensystems werden Chalkogene ("Erzbildner",) genannt. Nach der neueren Nummerierung der Gruppen durch die IUPAC handelt es sich um die Gruppe 16. Zu dieser Stoffgruppe gehören die Elemente Sauerstoff, Schwefel, Selen, Tellur, Polonium. Für die gegenständliche Erfindung sind nur jene Elemente einsetzbar, die bei Umgebungstemperatur fest sind, somit fällt Sauerstoff als Chalkogen weg.

Die Erfindung ist hauptsächlich zur Herstellung von Sulfiden gedacht, es wird dabei also Schwefel als Chalkogen verwendet. Hierbei ist besonders die Herstellung von Zinnsulfid angedacht, dessen chemische Formel SnS lautet und das auch als Zinn(II)-sulfid bezeichnet wird. Bei entsprechender stöchiometrischer Dosierung von Zinn und Schwefel kann auch Zinn(IV)-sulfid (SnS₂) hergestellt werden.

Als Metall kommen neben Elementen der 4. Hauptgruppe (nunmehr Gruppe 14), wie eben Zinn, auch Elemente der 5. Hauptgruppe (nunmehr Gruppe 15) in Frage, etwa Antimon und Bismut. Somit können mit der gegenständlichen Erfindung etwa auch Antimon(III)-sulfid Sb₂S₃ und Bismut(III)-sulfid Bi₂S₃ hergestellt werden.

Die verschiedenen Metalle können sowohl rein als auch als Mischung zur Herstellung von Chalkogeniden, insbesondere Sulfiden, verwendet werden.

### STAND DER TECHNIK

In der DE 198 15 992 A1 wird ein Verfahren zur Herstellung von Zinnsulfiden geoffenbart, bei welchem Zinn in fein verteilter Form mit Schwefel unter Inertgas oder Luftatmosphäre bei Temperaturen von 200°C bis 1500°C, bevorzugt 800-1200°C, umgesetzt wird, etwa in einem Muffelofen. Um das als Ausgangsmaterial benötigte Zinnpulver zu erhalten, muss bereits vor dem Herstellen von Zinnsulfid das Zinn entsprechend gemahlen werden.

Die US 3 577 231 A betrifft ein Verfahren zur Herstellung von Metallsulfiden. Dabei wird allerdings das Metall in einem eigenen Behälter geschmolzen und erst beim Umgießen in einen anderen Behälter mit schwefelhaltigem Material vermischt.

Die US 4 676 969 A zeigt ein Verfahren zur Synthese von anorganischen Chalkogeniden, wo zuerst stückiges Chalkogen in einen Behälter eingebracht und verdampft wird und dann das stückige Metall eingebracht wird.

### DARSTELLUNG DER ERFINDUNG

Es ist daher eine Aufgabe der vorliegenden Erfindung, ein Verfahren zur Herstellung von Metallchalkogeniden, insbesondere von Zinnsulfid, zur Verfügung zu stellen, das ohne den Einsatz von Metallpulver auskommt und das eine Reaktion zwischen Chalkogen und Luftsauerstoff unterbindet.

Diese Aufgabe wird durch ein Verfahren gemäß Anspruch 1 gelöst, bei welchem das Metall und das Chalkogen bei Temperaturen von 200-1700°C, insbesondere von 800-1200°C, in einem Behälter zu Metallchalkogeniden umgesetzt werden, indem vorgesehen wird,
dass Metall in stückiger Form in den Behälter zugeführt wird,
dass das Metall auf 200-1700°C, insbesondere auf 800-1200°C, erhitzt und geschmolzen wird,
dass das Chalkogen, das feste oder flüssige Form aufweist, erst bei Vorliegen einer Metallschmelze in den Behälter zugeführt wird.

Das Metall kann somit in Stücken von beispielsweise 0,001 - 50 cm zugegeben werden, ein vorheriges Zerkleinern ist nicht notwendig. Ebenso kann das Chalkogen in stückiger Form zugegeben werden, weil es ja in der flüssigen Metallschmelze verflüssigt werden kann. Es kann aber auch bereits in flüssiger Form in den Behälter eingebracht werden. Dadurch, dass das Chalkogen erst dann zugegeben wird, wenn eine Metallschmelze vorliegt, wird es sofort von dieser umgeben und das Chalkogen reagiert daher sofort mit der Metallschmelze.

Um eine Reaktion zwischen dem Chalkogen und Luftsauerstoff während des erfindungsgemäßen Verfahrens jedenfalls weitgehend zu unterbinden, ist vorgesehen, dass der Behälter vor oder nach dem Zuführen von Metall und vor dem Zuführen des Chalkogens gasdicht verschlossen und mit Inertgas gespült wird.

In dieser Hinsicht ist es auch sinnvoll, dass das Chalkogen und/oder weiteres Metall über gasdichte Schleusen in den Behälter eingebracht werden.

Dabei kann vorgesehen sein, dass die gasdichten Schleusen mit Inertgas gespült werden, und zwar vor und während des Durchleitens des Metalls und der Chalkogene.

Um die chemische Reaktion zwischen Metall und Chalkogen zu beschleunigen, um das Gemisch aus Metall und Chalkogen möglichst homogen zu gestalten und um gegebenenfalls weiteres festes Metall rascher zu schmelzen, kann vorgesehen sein, dass das Chalkogen und/oder weiteres Metall durch Rühren mit der Metallschmelze vermischt werden.

In einer bevorzugten Ausführungsform ist das Chalkogen Schwefel bzw. das Metall Zinn, und in einer besonders bevorzugten Ausführungsform kommen Schwefel und Zinn zum Einsatz, um Zinnsulfid SnS herzustellen.

Eine entsprechende Vorrichtung zur Durchführung des erfindungsgemäßen Verfahrens ist dadurch gekennzeichnet, dass
- ein Behälter vorgesehen ist, in welchem mittels Heizeinrichtungen Temperaturen von 200-1700°C, insbesondere von 800-1200°C, herstellbar sind,
- ein Deckel für den Behälter vorgesehen ist, der gasdicht mit dem Behälter verschließbar ist,
- ein Rührwerk vorgesehen ist, mit welchem Chalkogen in fester oder flüssiger Form mit einer im Behälter befindlichen Metallschmelze verrührt werden kann, und
- zumindest eine gasdichte Schleuse vorgesehen ist, durch welche Chalkogen portionsweise in fester oder flüssiger Form in den Behälter eingebracht und welche mit Inertgas gespült werden kann.

Um weiteres Metall, insbesondere festes Metall, in den Behälter einbringen zu können, kann zumindest eine weitere gasdichte Schleuse vorgesehen sein.

Sowohl die gasdichte Schleuse für das Chalkogen als auch die weitere gasdichte Schleuse für das Metall können durch den Deckel geführt sein. Dadurch kann der Behälter ohne solche Zuleitungen für Chalkogen oder Metall ausgebildet und entsprechend einfach gestaltet werden.

Sowohl die gasdichte Schleuse für das Chalkogen als auch die weitere gasdichte Schleuse für das Metall können fest mit dem Deckel verbunden sein. Durch das Aufsetzen des Deckels auf den Behälter werden gleichzeitig die Schleusen am Behälter angeordnet und befestigt.

Da auch das Rührwerk erst beim Vermischen von Metallschmelze und Chalkogen und gegebenenfalls weiterem Metall benötigt wird, kann auch vorgesehen sein, dass das Rührwerk am Deckel befestigt ist.

Zur Messung des Sauerstoffgehalts im Behälter und/oder in der gasdichten Schleuse können ein oder mehrere Sauerstoffmessgeräte vorgesehen sein.

Wenn Vorrichtungen vorgesehen sind, mit welchen der Behälter und/oder die gasdichte Schleuse mit Inertgas gespült werden können, dann kann die Bildung von Verbindungen zwischen Chalkogen und Luftsauerstoff vermindert werden.

### WEGE ZUR AUSFÜHRUNG DER ERFINDUNG

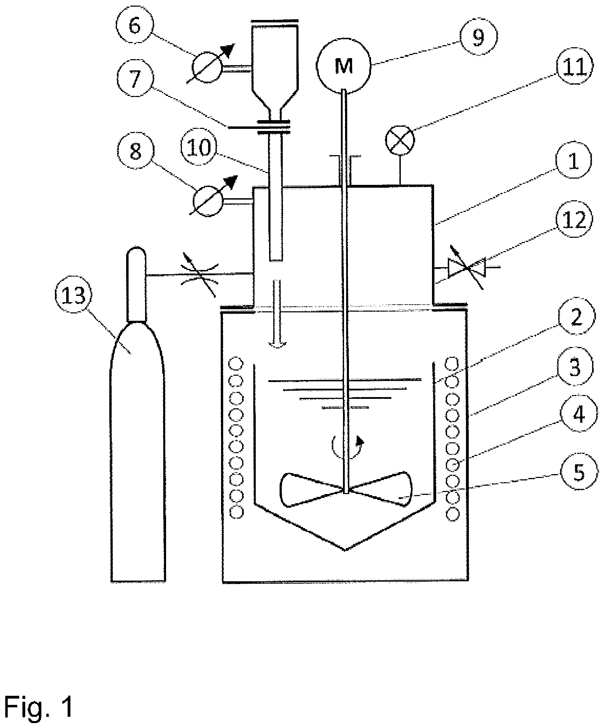

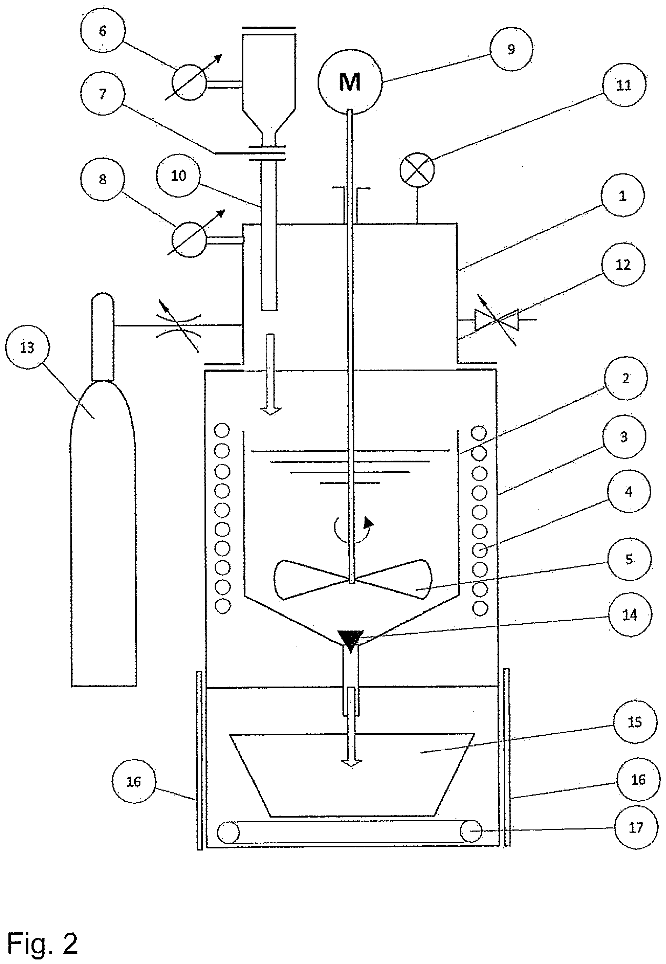

Die Erfindung wird anhand zweier schematischer Figuren, die jeweils ein mögliches Ausführungsbeispiel darstellen, näher erläutert, wobei Fig. 1 eine erfindungsgemäße Vorrichtung zeigt und in Fig. 2 zusätzlich ein Auffang- oder Abgussbehälter für die fertige Legierung vorgesehen ist.

Eine erfindungsgemäße Vorrichtung umfasst einen Behälter, der einen Innenbehälter 2 für die Legierung enthält, welcher auch als Legierungsbehälter bezeichnet wird, sowie einen Außenbehälter 3, der auch als Legierungskammer bezeichnet wird und den Innenbehälter 2 umschließt. Der Innenbehälter 2 ist seitlich, zwischen Innen- und Außenbehälter, von einer Heizung 4, etwa einer elektrischen Heizung, umgeben, sodass in seinem Inneren Temperaturen von 200-1700°C, insbesondere von 800-1200°C, erzeugt werden können, die Metall, in diesem Fall Zinn, zum Schmelzen bringen. Der Außenbehälter 3 ist aus Stahl gefertigt und mit feuerfesten Ofensteinen, z.B. Grafit, ausgekleidet. Es kann jedoch auch jede andere Art der Feuerfestauskleidung zur Anwendung kommen. Mit einem Deckel 1 kann der Behälter 2, 3 gasdicht verschlossen werden, etwa mittels feuerfester Dichtschnüre an den Verbindungsstellen zwischen Deckel 1 und Außenbehälter 3. Der Deckel 1 besteht ebenfalls aus Stahl und ist mit feuerfestem Material ausgekleidet. Zumindest der Außenbehälter 3 kann mit einer Luftkühlung zur Kühlung der Seitenwände des Innen- oder Außenbehälters 2, 3 ausgestattet sein. Der Deckel 1 ist als Hohlraumdeckel ausgebildet, der mit Luft gekühlt werden kann. Da in den Deckel 1 die Chargenführung 10 gasdicht mündet, durch welche das Chalkogen zugeführt wird und die mittels eines Schieberverschlusses 7 - einer gasdichten Schleuse gleich - verschlossen werden kann, wird der Deckel 1 auch als Schleusenkammer bezeichnet.

Der Innen- und der Außenbehälter 2, 3 bilden somit einen Ofen, der Deckel 1 dient als Ofenabdeckung, auf ihm sind bei diesem Beispiel die gasdichte Schleuse 7, 10 für den Schwefel aufgebaut. Auch das Rührwerk 5, 9 ist in den Deckel 1 integriert.

Auf dem Deckel 1 kann ein Rahmen befestigt sein, an welchem der Deckel 1 zum Öffnen des Behälters 2, 3 nach oben gehoben werden bzw. zum Schließen des Behälters 2, 3 nach unten abgesenkt werden kann. An diesem Rahmen können auch die gasdichten Schleusen, hier die gasdichte Schleuse 7, 10 für den Schwefel, sowie das Rührwerk 5, 9 - zusätzlich zur Befestigung am Deckel 1 selbst - befestigt sein. Das Rührwerk 5, 9 umfasst einen außerhalb des Behälters 2, 3 bzw. Deckels 1 angeordneten Rührermotor 9, der einen Rührer 5 antreibt, welcher in den Behälter 2, 3 ragt und zum Beispiel aus Grafit gefertigt sein kann. Das Rührwerk 5, 9 gewährleistet ein gutes Einbringen des Schwefels in die Zinnschmelze. Die gasdichte Schleuse 7, 10 für den Schwefel ist so ausgeführt, dass sie bei Bedarf mit Wasser gekühlt oder beheizt werden kann. Sowohl die gasdichte Schleuse 7, 10 als auch der Rührer 5 treten über außen gasdichte Öffnungen durch den Deckel 1 hindurch in den Innenraum des Behälters 2, 3. Im Deckel 1 kann auch ein Schauglas vorgesehen sein, um die Reaktion im Ofen genau beobachten zu können.

Mittels eines Sauerstoffmessgerätes 6 in Form einer Sauerstoffsonde kann der Sauerstoffgehalt des Gases im Behälter 2, 3, also im Ofenraum, gemessen werden. Mittels eines Sauerstoffgerätes 8 kann der Sauerstoffgehalt des Gases in der gasdichten Schleuse 7, 10 gemessen werden. Wenn der Sauerstoffgehalt zu hoch ist, wird mit Inertgas gespült. Der Sauerstoffgehalt wird laufend überwacht. Bei zu hohem Sauerstoffgehalt soll außerdem die Chalkogen-Zufuhr gestoppt werden, weil sonst die Abbrandgefahr steigt.

Das Absperrventil 12 dient dazu, bei geschlossenem Deckel 1 das Gas aus dem Behälter 2, 3 ablassen zu können, damit dieses durch Inertgas aus dem Schutzgasbehälter 13 ersetzt werden kann. Es kann auch zum Verringern eines Überdrucks verwendet werden, der durch das Druckmessgerät 11 festgestellt werden kann.

Das erfindungsgemäße Verfahren kann sowohl im sogenannten Batchbetrieb als auch im kontinuierlichen Betrieb ausgeführt werden. Im Folgenden wird die Herstellung von Zinnsulfid erläutert.

Im Batchbetrieb wird das stückige Zinn in den Innenbehälter 2 eingebracht und auf 1000°C erhitzt. Die Ofenabdeckung in Form des Deckels 1, welche die gasdichte Schleuse 7, 10 für den Schwefel trägt, wird auf den Außenbehälter 3 aufgesetzt und gasdicht verschraubt. Der Ofenraum wird mit Inertgas aus dem Schutzgasbehälter 13 gespült, um den Sauerstoffgehalt zu minimieren, damit ein Schwefelabbrand vermieden werden kann, wenn anschließend der Schwefel durch die gasdichte Schleuse 7, 10 zugeführt wird.

Für den kontinuierlichen Betrieb wird eine weitere gasdichte Schleuse vorgesehen, die ebenfalls am Deckel 1 aufgebaut sein kann, und durch welche das stückige Zinn zugeführt wird. Der Ofen muss also nicht geöffnet werden, um Zinn in diesen zu füllen.

Sowohl im Batchbetrieb als auch im kontinuierlichen Betrieb wird der feste oder flüssige Schwefel portionsweise über die mit Inertgas gespülte gasdichte Schleuse 7, 10 in die flüssige Zinnschmelze eingebracht und mit Hilfe des Rührwerks 5, 9 in der Zinnschmelze homogen verteilt. Die chemische Reaktion Sn + S → SnS findet statt. Nach jedem Abklingen der exothermen Reaktion wird weiterer Schwefel nachchargiert, bis die gesamte berechnete Menge eingebracht worden ist. Aufgrund des Siedepunkts des Schwefels von 444,7°C verdampft bei den hohen Ofenraumtemperaturen ein Teil des Schwefels. Der Schwefel wird im Über- oder Unterschuss, je nach Produktanforderung, zugegeben.

Nachdem die Schwefelzugabe abgeschlossen ist, wird die Schmelze noch etwa 15 Minuten nachgerührt und im Inertgas belassen. Danach wird das flüssige Zinnsulfid in eine geschlichtete Gussform abgegossen. Dabei kann die Schmelze entweder geschöpft oder durch Kippen des Behälters 1 geleert werden. Wegen einer möglichen oxidativen Reaktion sind nur geschlichtete, das heißt mit einem silikatischen Innenanstrich versehene, Gussformen zugelassen.

Gemäß Fig. 2 kann die Schmelze auch durch eine Öffnung an der tiefsten Stelle des Innenbehälters 2, die während der Herstellung der Schmelze durch einen Verschluss 14 verschlossen ist, abgelassen werden und in einem darunter angeordneten Auffang- oder Abgussbehälter 15 aufgefangen werden. Dieser Auffangbehälter 15 kann ebenfalls mittels Schleusentüren 16 gasdicht gegenüber der Umgebung abgeschlossen werden, die Schleusentüren 16 bilden dann mit weiteren Wänden eine sogenannte Abgusskammer. Mittels einer - hier als Förderband ausgeführten - Austragsmechanik 17 kann der Auffangbehälter 15 vom Bereich unter dem Behälter 2, 3 (aus der Abgusskammer) weggefördert werden.

Zwischen dem Verschluss 14 und der Mündung in den Auffangbehälter 15 kann eine weitere Schleuse (Vorschleuse) vorgesehen werden, um den Innenbehälter 2 und die Abgusskammer gasdicht voneinander zu trennen. Nach der Abgusskammer kann eine weitere Schleuse vorgesehen sein, die gasdicht gegenüber der Abgusskammer und der Umgebung abschließbar ist und wo die abgegossene Schmelze abgekühlt wird.

Sobald die Schmelze erstarrt ist, kann das Zinnsulfid zerkleinert und auf eine geforderte Korngröße gemahlen werden.

Die chemische Zusammensetzung des erfindungsgemäß hergestellten Zinnsulfids in Gewichts% ist wie folgt:

| | | |
|---|---|---|
| Zinn | Sn | 75-85% |
| Schwefel | S | 12-23% |
| Blei | Pb | < 300 ppm |
| Kupfer | Cu | < 1% |
| Kalzium | Ca | < 2% |
| Silizium | Si | < 1,5% |
| Natrium | Na | < 8% |
| Kadmium | Cd | < 0,0002% |
| Chromate | Cr(Vl) | < 0,0001% |

### BEZUGSZEICHENLISTE

- 1: Deckel (Schleusenkammer)
- 2: Innenbehälter (Legierungsbehälter)
- 3: Außenbehälter (Legierungskammer)
- 4: Heizung
- 5: Rührer des Rührwerks
- 6: Sauerstoffmessgerät
- 7: Schieberverschluss für Chargenführung 10
- 8: Sauerstoffmessgerät für Chargenführung 10
- 9: Rührermotor des Rührwerks
- 10: Chargenführung
- 11: Druckmessgerät
- 12: Absperrventil
- 13: Schutzgasbehälter
- 14: Verschluss des Innenbehälters (Legierungsbehälters) 2
- 15: Auffangbehälter
- 16: Schleusentüren
- 17: Austragsmechanik

## Patentansprüche

1. Verfahren zur Herstellung von Metallchalkogeniden, insbesondere von Metallsulfiden, wie Zinnsulfid, wobei das Metall und das Chalkogen bei Temperaturen von 200-1700°C, insbesondere von 800-1200°C, in einem Behälter (2, 3) zu Metallchalkogeniden umgesetzt werden, **dadurch gekennzeichnet,**
**dass** Metall in stückiger Form in den Behälter (2, 3) zugeführt wird,
**dass** das Metall auf 200-1700°C, insbesondere auf 800-1200°C, erhitzt und geschmolzen wird,
**dass** das Chalkogen, das feste oder flüssige Form aufweist, erst bei Vorliegen einer Metallschmelze in den Behälter (2, 3) zugeführt wird,
**dass** der Behälter (2, 3) vor oder nach dem Zuführen von Metall und vor dem Zuführen des Chalkogens gasdicht verschlossen und mit Inertgas gespült wird und
**dass** das Chalkogen und gegebenenfalls weiteres Metall über gasdichte Schleusen (7, 10) in den Behälter (2, 3) eingebracht werden.

2. Verfahren nach Anspruch 1, **dadurch gekennzeichnet, dass** die gasdichten Schleusen (7, 10) mit Inertgas gespült werden.

3. Verfahren nach einem der Ansprüche 1 bis 2, **dadurch gekennzeichnet, dass** das Chalkogen und/oder weiteres Metall durch Rühren mit der Metallschmelze vermischt werden.

4. Verfahren nach einem der Ansprüche 1 bis 3, **dadurch gekennzeichnet, dass** das Chalkogen Schwefel ist.

5. Verfahren nach einem der Ansprüche 1 bis 4, **dadurch gekennzeichnet, dass** das Metall Zinn ist.

6. Vorrichtung zur Durchführung des Verfahrens nach einem der Ansprüche 1 bis 5, **dadurch gekennzeichnet, dass**
- ein Behälter (2, 3) vorgesehen ist, in welchem mittels Heizeinrichtungen Temperaturen von 200-1700°C, insbesondere von 800-1200°C, herstellbar sind,
- ein Deckel (1) für den Behälter vorgesehen ist, der gasdicht mit dem Behälter (2, 3) verschließbar ist,
- ein Rührwerk (5, 9) vorgesehen ist, mit welchem Chalkogen in fester oder flüssiger Form mit einer im Behälter (2, 3) befindlichen Metallschmelze verrührt werden kann, und
- zumindest eine gasdichte Schleuse (7, 10) vorgesehen ist, durch welche Chalkogen portionsweise in fester oder flüssiger Form in den Behälter (2, 3) eingebracht und welche mit Inertgas gespült werden kann.

7. Vorrichtung nach Anspruch 6, **dadurch gekennzeichnet, dass** zumindest eine weitere gasdichte Schleuse vorgesehen ist, durch welche Metall, insbesondere festes Metall, in den Behälter (2, 3) eingebracht werden kann.

8. Vorrichtung nach Anspruch 6 oder 7, **dadurch gekennzeichnet, dass** zumindest eine gasdichte Schleuse (7, 10) durch den Deckel (1) geführt ist.

9. Vorrichtung nach einem der Ansprüche 6 bis 8, **dadurch gekennzeichnet, dass** zumindest eine gasdichte Schleuse (7, 10) fest mit dem Deckel (1) verbunden ist.

10. Vorrichtung nach einem der Ansprüche 6 bis 9, **dadurch gekennzeichnet, dass** das Rührwerk (5, 9) am Deckel (1) befestigt ist.

11. Vorrichtung nach einem der Ansprüche 6 bis 10, **dadurch gekennzeichnet, dass** ein oder mehrere Sauerstoffmessgeräte (6, 8) zur Messung des Sauerstoffgehalts im Behälter (2, 3) und/oder in der gasdichten Schleuse (7, 10) vorgesehen sind.

12. Vorrichtung nach einem der Ansprüche 6 bis 11, **dadurch gekennzeichnet, dass** Vorrichtungen (13) vorgesehen sind, mit welchen der Behälter (2, 3) und/oder die gasdichte Schleuse (7, 10) mit Inertgas gespült werden können.

## Claims

1. A method for producing metal chalcogenides, in particular metal sulfides, such as tin sulfide, wherein the metal and the chalcogen are reacted at temperatures of 200-1700°C, in particular 800-1200°C, in a container (2, 3) to form metal chalcogenides, **characterized in that**
metal is fed in chunky form into the container (2, 3),
the metal is heated to 200-1700°C, in particular to 800-1200°C, and melted,
the chalcogen, which has solid or liquid form, is first fed into the container (2, 3) upon the provision of a metal melt,
the container (2, 3) is closed gastight and flushed using inert gas before or after the feed of metal and before the feed of the chalcogen, and
the chalcogen and optionally further metal are introduced via gastight airlocks (7, 10) into the container (2, 3).

2. The method according to Claim 1, **characterized in that** the gastight airlocks (7, 10) are flushed using inert gas.

3. The method according to any one of Claims 1 to 2, **characterized in that** the chalcogens and/or further metal is/are mixed with the metal melt by stirring.

4. The method according to any one of Claims 1 to 3, **characterized in that** the chalcogen is sulfur.

5. The method according to any one of Claims 1 to 4, **characterized in that** the metal is tin.

6. A device for carrying out the method according to any one of Claims 1 to 5, **characterized in that**
- a container (2, 3) is provided, in which temperatures of 200-1700°C, in particular 800-1200°C, are producible by means of heating units,
- a cover (1) is provided for the container (2, 3), which is closable gastight with the container,
- a stirring mechanism (5, 9) is provided, using which chalcogen in solid or liquid form can be stirred with a metal melt located in the container (2, 3), and
- at least one gastight airlock (7, 10) is provided, through which chalcogen can be introduced in portions in solid or liquid form into the container (2, 3) and which can be flushed using inert gas.

7. The device according to Claim 6, **characterized in that** at least one further gastight airlock is provided, through which metal, in particular solid metal, can be introduced into the container (2, 3).

8. The device according to Claim 6 or 7, **characterized in that** at least one gastight airlock (7, 10) is led through the cover (1).

9. The device according to any one of Claims 6 to 8, **characterized in that** at least one gastight airlock (7, 10) is fixedly connected to the cover (1).

10. The device according to any one of Claims 6 to 9, **characterized in that** the stirring mechanism (5, 9) is fastened on the cover (1).

11. The device according to any one of Claims 6 to 10, **characterized in that** one or more oxygen meters (6, 8) are provided for measuring the oxygen content in the container (2, 3) and/or in the gastight airlock (7, 10).

12. The device according to any one of Claims 6 to 11, **characterized in that** devices (13) are provided, using which the container (2, 3) and/or the gastight airlock (7, 10) can be flushed using inert gas.

## Revendications

1. Procédé pour la fabrication de chalcogénures métalliques, en particuliers de sulfures métalliques tels que du sulfure d'étain, dans lequel le métal et le chalcogène sont transformés en chalcogénures métalliques dans un récipient (2, 3) à des températures de 200 à 1700 °C, en particulier de 800 à 1200 °C, **caractérisé en ce que**
le métal est introduit dans le récipient (2, 3) sous forme de morceaux,
**en ce que** le métal est chauffé entre 200 et 1700 °C, en particulier entre 800 et 1200 °C, et fondu,
**en ce que** le chalcogène, sous forme solide ou liquide, n'est ajouté dans le récipient (2, 3) que lorsque du métal en fusion est formé,
**en ce que** le récipient (2, 3) est fermé de façon étanche aux gaz avant ou après l'introduction du métal et avant l'introduction du chalcogène et irrigué avec un gaz inerte et
**en ce que** le chalcogène et, éventuellement, d'autre métal sont introduits dans le récipient (2, 3) en passant par des sas étanches aux gaz (7, 10).

2. Procédé selon la revendication 1, **caractérisé en ce que** les sas étanches aux gaz (7, 10) sont irrigués avec un gaz inerte.

3. Procédé selon l'une des revendications 1 à 2, **caractérisé en ce que** le chalcogène et/ou l'autre métal sont mélangés au métal en fusion par agitation.

4. Procédé selon l'une des revendications 1 à 3, **caractérisé en ce que** le chalcogène est du soufre.

5. Procédé selon l'une des revendications 1 à 4, **caractérisé en ce que** le métal est de l'étain.

6. Dispositif pour la mise en oeuvre du procédé selon l'une des revendications 1 à 5, **caractérisé en ce que**
- il est prévu un récipient (2, 3) dans lequel des températures de 200 à 1700 °C, en particulier de 800 à 1200 °C, peuvent être créées au moyen de dispositifs de chauffage ;
- il est prévu un couvercle (1) pour le récipient, qui peut être fermé de façon étanche aux gaz avec le récipient (2, 3) ;
- il est prévu un agitateur (5, 9) avec lequel du chalcogène sous forme solide ou liquide peut être brassé avec un métal en fusion qui se trouve dans le récipient (2, 3) ;
- il est prévu au moins un sas étanche aux gaz (7, 10) à travers lequel du chalcogène est introduit par portions, sous forme solide ou liquide, dans le récipient (2, 3), et qui est irrigué avec un gaz inerte.

7. Dispositif selon la revendication 6, **caractérisé en ce qu'**il est prévu au moins un autre sas étanche aux gaz à travers lequel du métal, en particulier du métal solide, peut être introduit dans le récipient (2, 3).

8. Dispositif selon la revendication 6 ou 7, **caractérisé en ce qu'**au moins un sas étanche aux gaz (7, 10) passe à travers le couvercle (1).

9. Dispositif selon l'une des revendications 6 à 8, **caractérisé en ce qu'**au moins un sas étanche aux gaz (7, 10) est fixé au couvercle (1).

10. Dispositif selon l'une des revendications 6 à 9, **caractérisé en ce que** l'agitateur (5, 9) est fixé au couvercle (1).

11. Dispositif selon l'une des revendications 6 à 10, **caractérisé en ce qu'**un ou plusieurs appareils de mesure de l'oxygène (6, 8) sont prévus pour mesurer la teneur en oxygène dans le récipient (2, 3) et/ou dans le sas étanche aux gaz (7, 10).

12. Dispositif selon l'une des revendications 6 à 11, **caractérisé en ce que** sont prévus des dispositifs (13) avec lesquels le récipient (2, 3) et/ou le sas étanche aux gaz (7, 10) peuvent être irrigués avec du gaz inerte.
